Europäisches Patentamt

(19) European Patent Office

Office européen des brevets

(11) Numéro de publication: **0 055 966**
**B1**

(12) **FASCICULE DE BREVET EUROPEEN**

(45) Date de publication du fascicule du brevet:
14.08.85

(21) Numéro de dépôt: **81402089.7**

(22) Date de dépôt: **29.12.81**

(51) Int. Cl.⁴: **G 02 F 1/133**

(54) Dispositif d'affichage matriciel comprenant deux familles d'électrodes lignes et son procédé de commande.

(30) Priorité: **05.01.81 FR 8100049**

(43) Date de publication de la demande:
**14.07.82 Bulletin 82/28**

(45) Mention de la délivrance du brevet:
**14.08.85 Bulletin 85/33**

(84) Etats contractants désignés:
**CH DE GB IT LI NL**

(56) Documents cités:
**DE - A - 2 349 208**
**US - A - 3 975 085**
**US - A - 3 982 239**
**US - A - 3 989 355**

(73) Titulaire: **COMMISSARIAT A L'ENERGIE ATOMIQUE**
**Etablissement de Caractère Scientifique Technique et Industriel, 31/33, rue de la Fédération, F-75015 Paris (FR)**

(72) Inventeur: **Clerc, Jean Frédéric, 10, Allée du Pré Blanc, F-38240 Meylan (FR)**
Inventeur: **Robert, Jacques, Domaine de la Ronce Les Etangs AJ, F-92410 Ville d'Avray (FR)**

(74) Mandataire: **Mongrédien, André et al, c/o BREVATOME 25, rue de Ponthieu, F-75008 Paris (FR)**

ACTORUM AG

## Description

La présente invention a pour objet un dispositif d'affichage matriciel comprenant deux familles d'électrodes lignes, et son procédé de commande. Elle trouve une application en opto-électronique, et principalement dans la commande de cellules à cristaux liquides utilisées notamment comme convertisseurs d'informations électriques en informations optiques, dans le traitement des images optiques en temps réel, dans la réalisation de filtres colorés pouvant servir notamment en télévision en couleur, et dans l'affichage analogique.

Plus spécialement, l'invention concerne un dispositif d'affichage matriciel comprenant une cellule d'affichage constituée par deux parois isolantes transparentes et par un matériau comprenant une pluralité de zones réparties en matrice et comprenant une première famille de p lignes d'électrodes parallèles, disposées sur l'une des deux parois isolantes, et une deuxième famille de q colonnes d'électrodes parallèles, disposées sur l'autre paroi isolante, les lignes et les colonnes étant croisées, une zone $x_i y_j$ du matériau étant définie par la région de recouvrement entre la ligne $x_i$ (où i est un entier qui peut prendre toutes les valeurs comprises en 1 et p) et la colonne $y_j$ (où j est un entier compris entre 1 et q). Les bandes formées par les lignes et les colonnes sont de nature telle qu'elles peuvent véhiculer des signaux appropriés à l'excitation du matériau présentant propriété optique dépendant de ladite excitation. Ce système d'électrodes est un système à bandes croisées ou, en terminologie anglo-saxonne, un sytème «crossbar».

On connaît de nombreux dispositifs de ce genre qui utilisent par exemple comme matériau sensible un film de cristal liquide, et pour lesquels l'excitation est électrique. L'invention s'applique particulièrement bien à de tels dispositifs, mais elle s'applique de manière plus générale à tout dispositif à bandes croisées comprenant un matériau dont une propriété optique peut être modifiée à l'aide d'une excitation électrique. Le matériau peut être un corps solide ou liquide, amorphe ou cristallin. La propriété optique peut être une opacité, un indice de réfraction, une transparence, une absorption, une diffusion, une diffraction, une convergence, un pouvoir rotatoire, une biréfringence, une intensité réfléchie dans un angle solide déterminé, etc...

Un procédé de commande de tels dispositifs d'affichage connus consiste par exemple dans le cas d'une cellule à cristaux liquides où l'excitation est de nature électrique, à appliquer sur la ligne $x_i$ une tension $V_x$ alternative et sur les autres lignes une tension nulle et à appliquer sur les colonnes $Y_j$ des tension $V_{yj}$ alternatives de même durée et de même fréquence que la tension $V_x$, mais qui sont déphasées par rapport à celles-ci d'une quantité $\varphi_{ji}$. Ce déphasage $\varphi_{ji}$ permet de faire varier l'intensité du signal à afficher, c'est-à-dire permet d'obtenir différents niveaux de gris.

Un tel procédé de commande est décrit dans le brevet français n° 2 279 123 déposé le 6 février 1974 par le demandeur et intitulé «procédé de commande d'une caractéristique optique d'un matériau et imageur analogique mettant en œuvre ledit procédé».

Ce procédé de commande appliqué aux dispositifs tels que décrits précédemment présente l'inconvénient de conduire à des effets d'accumulation différentielle de charges électriques.

Certains auteurs ont utilisé, associées aux premières familles d'électrodes, des familles supplémentaires d'électrodes, dont l'une d'elles était formée de p lignes parallèles d'électrodes, disposée sur la deuxième famille d'électrodes et isolée électriquement de ladite deuxième famille. Un tel dispositif a été décrit dans le document US–A 3 989 355. Malheureusement, ce dispositif est relativement complexe.

La présente invention a justement pour objet un dispositif d'affichage à deux familles d'électrodes lignes et son procédé de commande permettant de remédier aux inconvénients ci-dessus notamment en réduisant les effets d'accumulation de charges électriques quelle que soit l'image affichée.

La présente invention concerne un dispositif d'affichage matriciel comprenant une cellule d'affichage incluant deux parois isolantes transparentes, un matériau électro-optique, une première famille de p lignes d'électrodes parallèles, déposées sur l'une des parois isolantes, une deuxième famille de q colonnes d'électrodes parallèles, déposées sur l'autre paroi isolante, les lignes et les colonnes étant croisées et définissant ainsi dans ledit matériau électro-optique une pluralité de zones réparties en matrice, une zone particulière $x_i y_j$ étant définie par la région du matériau recouvert par la ligne $x_i$, où i est un entier tel que $1 \leqslant i \leqslant p$, et par la colonne $y_j$, où j est un entier tel que $1 \leqslant j \leqslant q$, une troisième famille de p lignes parallèles d'électrodes, d'orientation identique à celle de la première famille, disposée sur la deuxième famille d'électrodes, et isolée électriquement de ladit deuxième famille au moyen d'une couche isolante, et des moyens permettant de délivrer sur les électrodes des signaux d'excitation, ledit matériau ayant une propriété optique dépendant de ladite excitation; ce dispositif se caractérise en ce que ledit matériau est intercalé entre la première famille d'électrodes et la troisième famille d'électrodes et au contact desdites première et troisième familles d'électrodes, et en ce que chaque ligne de ladite troisième famille se présente sous la forme d'un ensemble d'électrodes point séparées, chacune de ces électrodes point étant munie d'un interrupteur apte, soit à la réunir à un conducteur à potentiel constant, commun à toutes les électrodes point d'une même ligne de la famille, soit à l'isoler électriquement, la commande de cet interrupteur étant effectuée par un conducteur de commande commun à toutes les électrodes point d'une même ligne de la famille.

Selon un mode préféré de réalisation du dispositif d'affichage de l'invention, le matériau est un film de cristal liquide dont la propriété optique dépend du champ électrique qui lui est appliqué, lesdits signaux d'excitation étant des tensions électriques.

La présente invention a également pour objet un procédé de commande d'un dispositif d'affichage matriciel tel que défini précédemment.

Ce procédé visant à commander une propriété optique du matériau de la zone $x_iy_j$, se caractérise en ce que l'on applique sur la ligne $x_i$ de la première famille d'électrodes un potentiel négatif $-V_1$ et sur les autres lignes de ladite famille un potentiel négatif $-V_0$, et on applique sur la colonne $y_j$ de la deuxième famille d'électrodes un potentiel positif la ligne $x_i$ de la troisième famille d'électrodes étant isolée électriquement et les autres lignes de ladite famille portées à un potentiel positif $V'_0$ inférieur à $V_2$.

Selon une variante du procédé selon l'invention, on commande simultanément les q zones d'une même ligne $x_i$ de la première famille d'électrodes en appliquant simultanément sur chaque colonne de la deuxième famille d'électrodes un potentiel $V_2$ fonction de la valeur de la propriété optique, désirée à l'intersection.

D'autres caractéristiques et avantages de l'invention ressortiront mieux de la description qui va suivre, donée à titre purement illustratif et nullemet limitatif, en référence aux dessins annexés, dans lesquels:

– la figure 1 représente schématiquement un dispositif d'affichage conformément à l'invention;
– la figure 2 représente la répartition du potentiel existant entre les différentes familles d'électrodes du dispositif de la figure 1; et
– la figure 3 représente schématiquement la construction de la troisième famille d'électrodes du dispositif d'affichage conformément à l'invention.

Pour plus de clarté, la description se réfère à un dipositif d'affichage comprenant comme matériau un film de cristal liquide dont la propriété optique dépend du champ électrique qui lui est appliqué. Comme on l'a indiqué plus haut, l'invention est d'application beaucoup plus générale, mais ces dispositifs à cristaux liquides étant actuellement bien connus et largement utilisés, il est préférable d'effectuer la description sur cet exemple.

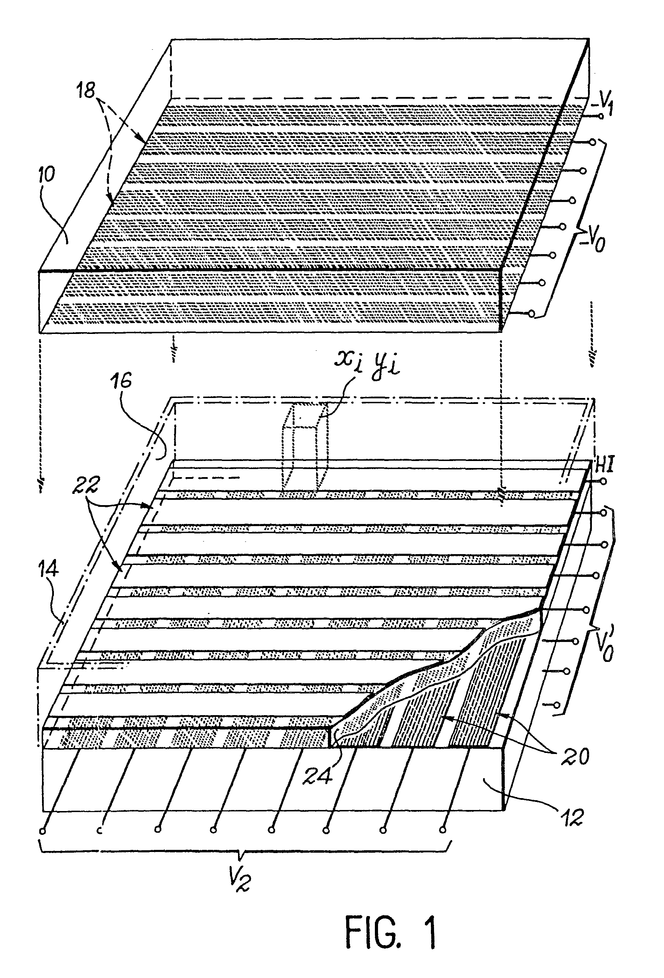

La figure 1 représente une cellule d'affichage à bandes croisées. Elle comporte deux parois 10 et 12, généralement transparentes, disposées de part et d'autre d'une cale d'épaisseur 14, en matériau isolant, définissant un volume 16 qui est occupé, lorsque la cellule est montée, par le matériau dont on commande une propriété optique, par exemple un film de cristal liquide. Sur la paroi 10 est déposée une première famille de p lignes d'électrodes 18 et sur la paroi 12 une deuxième famille de q colonnes d'électrodes 20, constituée chacune par une série de bandes parallèles conductrices transparentes, réalisées par exemple en oxyde d'indium, notées $x_i$ pour les lignes et $y_j$ pour les colonnes. La surface utile du cristal liquide est ainsi décomposée en une mosaïque de zones correspondant aux zones de recouvrement des deux familles d'électrodes, chaque zone correspondant au recouvrement de deux bandes $x_i$ et $y_j$, et qui peut, de ce fait, être repéré par la notation $x_iy_j$.

L'excitation d'une zone, c'est-à-dire la commande d'une propriété optique du cristal liquide contenu dans cette zone, s'effectue en appliquant sur les électrodes $x_i$ et $y_j$ des tensions électriques, délivrées par des sources d'alimentation électriques, non représentées, qui entraînent l'apparition d'un champ électrique au sein du cristal liquide. On fait ainsi apparaître une image sur l'ensemble de la cellule en la définissant point par point et en sensibilisant les zones les unes après les autres selon des principes connus de commande séquentielle, mettant à profit le temps important de décroissance de l'effet optique induit dans le cristal liquide.

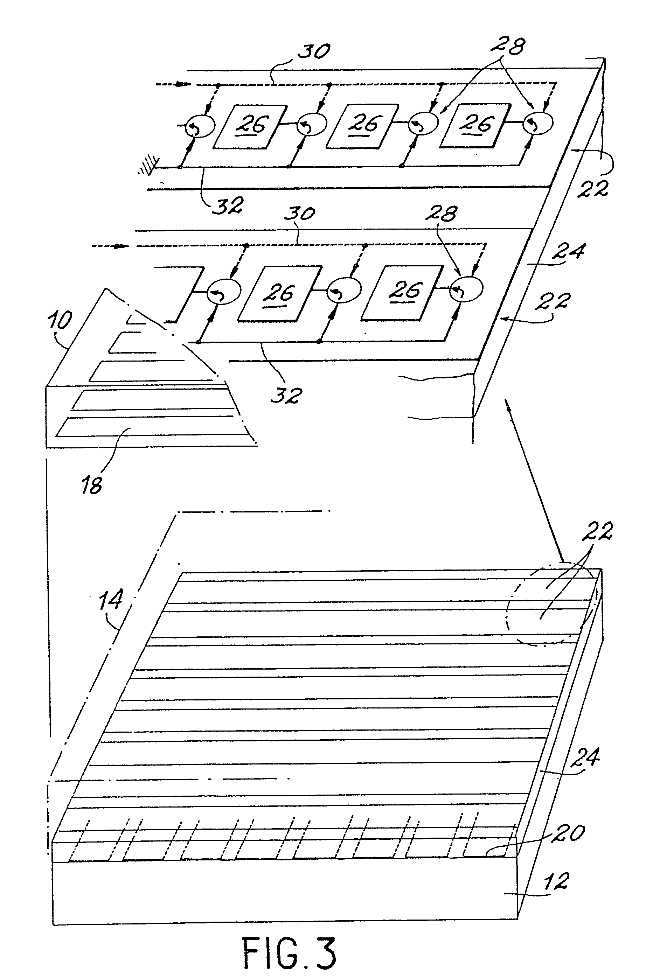

Selon l'invention, cette cellule d'affichage comprend, de plus, une troisième famille d'électrodes dont la construction est plus précisément illustrée sur la figure 3, cette troisième famille étant formée de p lignes d'électrodes 22 d'orientation identique à celle de la première famille et disposée sur la deuxième famille d'électrodes 20 et isolée de cette dernière au moyen d'une couche isolante 24 de faible épaisseur et de grande constante diélectrique, réalisée par exemple en silice ou en alumine. Comme les deux autres familles d'électrodes, les électrodes de la troisième famille 22 sont transparentes et réalisées par exemple en oxyde d'indium. Le film de cristal liquide du fait de l'existence de cette troisième famille d'électrodes se trouve intercalé entre la première famile d'électrodes 18 et la troisième famille 22 et au contact desdites première et troisième familles d'électrodes.

Selon l'invention, pour exciter la propriété optique de la zone $x_iy_j$ du matériau, c'est-à-dire obtenir un affichage du point correspondant sur le dispositif d'affichage, on applique sur la ligne $x_i$ de la première famille d'électrodes un potentiel $-V_1$ et sur les autres lignes de ladite première famille un potentiel $-V_0$, et on applique sur la colonne $y_j$ une tension $V_2$. En ce qui concerne la troisième famille d'électrodes, la ligne $x_i$ de ladite famille est isolée, c'est-à-dire que le circuit de commande (non représenté) est mis en haute impédance (H.I.) et les autres lignes de ladite famille sont portées à un potentiel $V'_0$.

Pour obtenir l'affichage de toute une ligne $x_i$ du dispositif d'affichage matriciel, on applique simultanément sur chaque colonne de la deuxième famille d'électrodes le potentiel $V_2$ correspondant à l'état optique désiré à l'intersection.

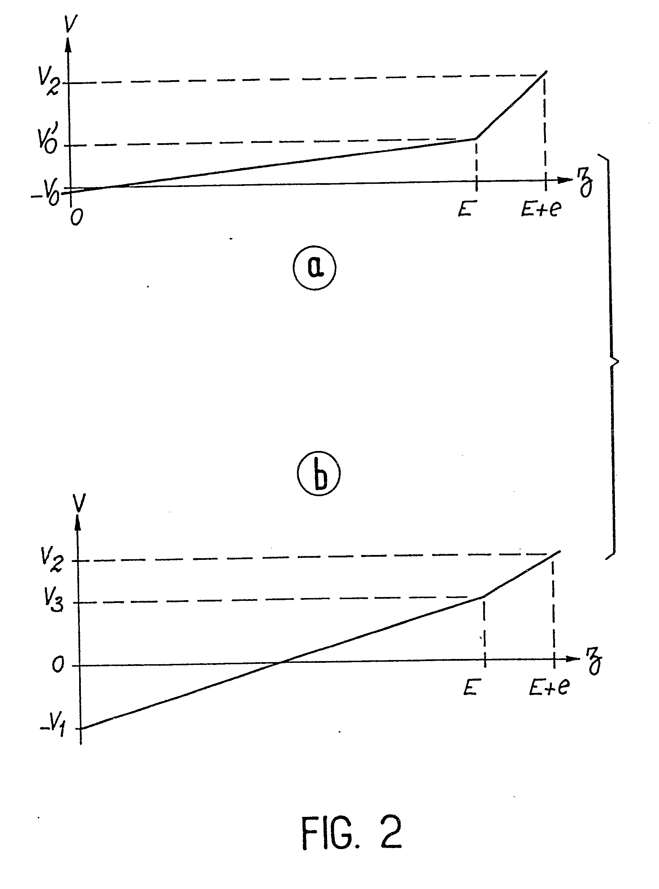

Sur la figure 2, on a représenté la réparition du potentiel existant entre la première famille d'électrodes et la deuxième famille d'électrodes. En abscisses, on a représenté la distance z à la première famille d'électrodes et en ordonnées le potentiel correspondant.

Le matériau d'affichage, compris entre la ligne $x_i$ de la première et troisième famille d'électrodes, présente une épaisseur E; z varie donc de 0 à E. La couche isolante 24, comprise entre la ligne $x_i$ de la troisième famille d'électrodes et la colonne $y_j$ de la deuxième famille d'électrodes, présente une épaisseur e; z varie donc de E à E + e.

Lorsque les lignes de la première famille d'électrodes sont portées au potentiel $-V_0$, c'est-à-dire que lesdites lignes ne sont pas sélectionnées (courbe a), et que les lignes de la troisième famille d'électrodes sont portées au potentiel $V'_0$, le matériau d'affichage voit alors à ses bornes une tension $V'_0 + V_0$ constante quel que soit le potentiel appliqué aux colonnes du dispositif d'affichage. En conséquence, quelle que soit la zone du matériau d'affichage qui est excitée, les points affichés ou non, voisins, reçoivent des tensions parasites rigoureusement égales, et dont la valeur est modulable.

Lorsque la ligne $x_i$ de la première famille d'électrodes est portée au potentiel $-V_1$, c'est-à-dire que ladite ligne est sélectionnée (courbe b), et la colonne $y_j$ au potentiel $V_2$, la tension $V_2 + V_1$ se répartit entre la couche isolante et le matériau d'affichage, la ligne $x_i$ de la troisième famille d'électrodes étant isolée électriquement. Le potentiel $V_3$ représente, dans ce cas, le potentiel existant au niveau de la ligne $x_i$ de la troisième famille d'électrodes.

La tension vue par le matériau d'affichage, c'est-à-dire $V_3 + V_1$, devant être la plus grande possible afin d'obtenir un affichage contrasté, la couche isolante 24 doit avoir une faible épaisseur par rapport à l'épaisseur du matériau d'affichage et/ou une constante diélectrique supérieure à celle du matériau d'affichage. En effet, si l'on écrit la continuité du champ électrique sur la ligne $x_i$ de la troisième famille d'électrodes, sachant que $\varepsilon_m$ et $\varepsilon_i$ représentent respectivement la constante diélectrique du matériau d'affichage et de la couche isolante, on obtient la relation:

$$\frac{(V_3 + V_1)\varepsilon_m}{E} = \frac{(V_2 - V_3)\varepsilon_i}{e}$$

En conséquence, si l'on veut que le potentiel $V_3$ soit peu différent du potentiel $V_2$, il faut que

$$\frac{\varepsilon_m}{E} \text{ soit très inférieur à } \frac{\varepsilon_i}{e}.$$

Dans une première étape, on pourrait envisager de réaliser la troisième famille d'électrodes sous forme de p bandes conductrices continues et parallèles entre elles, mais une telle réalisation de ladite troisième famille d'électrodes présente un certain nombre d'inconvénients.

En effet, dans le cas présent, la répartition de potentiels, ci-dessus exposée n'est rigoureusement réalisée que si l'on peut considérer que les différentes zones d'une électrode de la troisième famille, correspondant aux différents points du dispositif d'affichage, sont susceptibles de prendre des potentiels indépendants les uns des autres. Ceci serait faux si ces électrodes étaient très conductrices car elles seraient à chaque instant équipotentielles. La nature des électrodes minces en oxyde d'indium fait que cette supposition est exacte au moment de l'application des potentiels d'adressage d'une ligne et que, si les signaux d'adressage des lignes sont suffisamment brefs, le fonctionnement est bien celui qui a été décrit.

Toutefois, si ces signaux sont de longue durée, le potentiel en chaque point de la ligne va avoir tendance à évoluer vers une valeur uniforme, fonction des niveaux appliqués aux électrodes colonne et réalisant une moyenne entre ces niveaux: ainsi l'excitation dans l'état optique de chaque point d'une ligne , dépendra de l'excitation des autres points de la ligne (et ceci d'une manière variable selon la conductivité des électrodes lignes); de plus, entre deux lignes successives, le potentiel d'équilibre étant différent, pour un potentiel donné appliqué a la colonne, l'état optique du point intersection sera différent. Ces phénomènes se traduisent par une détérioration du contact.

L'invention illustrée sur la figure 3 permet de pallier à cet inconvénient. Chaque ligne de la troisième famille est constituée d'un ensemble d'électrodes point 26 séparées; chaque électrode point 26 est munie d'un interrupteur de commande 28, réalisé par exemple sous forme d'un transistor en couche mince. Tous les interrupteurs de commande 28 d'une même ligne sont commandés par un même conducteur de commande 30. Tous les interrupteurs de commande d'une même ligne permettent de connecter toutes les électrodes point 26 d'une même ligne à un conducteur commun 32 à potentiel constant (lorsque la ligne n'est pas adressée) ou de les isoler électriquement (lorsque la ligne est adressée).

Dans un dispositif d'affichage utilisant une cellule à cristal liquide, par exemple du type nématique, le phénomène utilisé est l'orientation collective des molécules dudit cristal parallèlement aux électrodes, lorsque ledit cristal est soumis à un champ électrique. Le phénomène utilisé dans un tel dispositif est décrit dans le brevet français n° 2 279 123, précédemment cité.

Pour éviter toute perturbation dans le liquide, due notamment à des transits d'ions (phénomène de polarisation), on peut inverser la tension appliquée aux bornes du matériau. Pour résoudre ce problème, on peut utiliser des tensions alternatives pour commander la propriété optique du matériau.

Le dispositif d'affichage décrit précédemment présente, de plus, l'avantage de permettre un taux de multiplexage des signaux appliqués aux électrodes illimité, lors de l'adressage des différentes lignes du dispositif et ce sans perturbation de l'affichage des points déjà affichés, la limitation du taux de multiplexage étant liée aux effets d'accumulation différentielle.

Le procédé de commande d'un dispositif d'affichage selon l'invention est applicable dans le cas d'un affichage binaire, la tension $V_2$ peut alors prendre deux valeurs distinctes et deux seulement; mais bien entendu, on peut appliquer ce procédé de commande à un affichage analogique, la tension $V_2$ pouvant alors prendre toute valeur comprise entre deux niveaux.

**Revendications**

1. Dispositif d'affichage matriciel comprenant une cellule d'affichage incluant deux parois (10, 12) isolantes transparentes, un matériau électro-optique, une première famille de p lignes d'électrodes parallèles (18), déposées sur l'une des parois isolantes (10), une deuxième famille de q colonnes d'électrodes parallèles (20), déposées sur l'autre paroi isolante (12), les lignes et les colonnes étant croisées et définissant ainsi dans ledit matériau électro-optique une pluralité de zones réparties en matrice, une zone particulière $x_i y_j$ étant définie par la région du matériau recouvert par la ligne $x_i$, où i est un entier tel que $1 \leqslant i \leqslant$ p, et par la colonne $y_j$, où j est un entier tel que $1 \leqslant j \leqslant q$, une troisième famille de p lignes parallèles (22) d'électrodes d'orientation identique à celle de la première famille, disposée sur la deuxième famille électrodes (20), et isolée électriquement de ladite deuxième famille au moyen d'une couche isolante (24), et des moyens permettant de délivrer sur les électrodes des signaux d'excitation, ledit matériau ayant une propriété optique dépendant de ladite excitation, caractérisé en ce que ledit matériau est intercalé entre la première famille d'électrodes (18) et la troisième famille d'électrodes (22) et au contact desdites première et troisième familles d'électrodes, et en ce que chaque ligne (22) de ladite troisième famille se présente sous la forme d'un ensemble d'électrodes point séparées (26), chacune de ces électrodes point (26) étant munie d'un interrupteur (28) apte, soit à la réunir à un conducteur à potentiel constant (32), commun à toutes les électrodes point d'une même ligne de la famille, soit à l'isoler électriquement, la commande de cet interrupteur étant effectuée par un conducteur de commande (30) commun à toutes les électrodes point d'une même ligne de la famille.

2. Dispositif d'affichage selon la revendication 1, caractérisé en ce que le matériau est un film de cristal liquide dont la propriété optique dépend du champ électrique qui lui est appliqué, lesdits signaux d'excitation étant des tension électriques.

3. Dispositif d'affichage selon l'une quelconque des revendications 1 et 2, caractérisé en ce que les familles d'électrodes (18, 20, 22) sont constituées en un matériau conducteur transparent.

4. Dispositif d'affichage selon la revendication 3, caractérisé en ce que le matériau conducteur transparent est de l'oxyde d'indium.

5. Dispositif d'affichage selon l'une quelconque des revendications 1 à 4, caractérisé en ce que la couche isolante (24) est choisi dans le groupe comprenant l'alumine, la silice.

6. Procédé de commande d'un dispositif d'affichage matriciel selon la revendication 1, caractérisé en ce que, pour commander la propriété optique du matériau de la zone $x_i y_j$, on applique sur la ligne $x_i$ de la première famille d'électrodes (18) un potentiel négatif $-V_1$ et sur les autres lignes de ladite famille un potentiel négatif $-V_0$, et on applique sur la colonne $y_j$ de la deuxième famille d'électrodes (20) un potentiel positif $V_2$, la ligne $x_i$ de la troisième famille d'électrodes (22) étant isolée et les autres lignes de ladite famille portées à un potentiel positif $V'_0$ inférieur à $V_2$.

7. Procédé de commande selon la revendication 6, caractérisé en ce que l'on commande simultanément les q zones d'une même ligne $x_i$ de la première famille d'électrodes en appliquant simultanément sur chaque colonne de la deuxième famille d'électrodes le potentiel $V_2$.

**Patentansprüche**

1. Matrixanzeigevorrichtung mit einer Anzeigezelle, die zwei isolierende, transparente Wände, ein elektrooptisches Material, eine erste Art von p parallelen Linienelektroden (18), die auf einer der isolierenden Wände (10) angeordnet sind, eine zweite Art von q parallelen Spaltenelektroden (20), die auf der anderen isolierenden Wand (12) angeordnet sind, aufweist, wobei die Linien und die Spalten einander kreuzen und auf diese Weise in dem elektrooptischen Material eine Vielzahl von matrixartig unterteilten Zonen ausbilden, wobei eine spezielle Zone $x_i y_j$ durch den Materialbereich begrenzt ist, der von der Linie $x_i$ und der Spalte $y_j$ bedeckt ist, wobei i eine ganze Zahl $1 \leqslant i \leqslant p$ und j eine ganze Zahl $1 \leqslant j \leqslant q$ ist, eine dritte Art von p parallelen Linienelektroden gleicher Richtung wie jene der ersten Art, die auf der zweiten Elektrodenart (20) angeordnet ist und elektrisch von dieser mittels einer Isolierschicht (24) isoliert ist, und Einrichtungen, die es gestatten, an die Elektroden Erregungssignale anzulegen, wobei das Material eine optische Eigenschaften aufweist, die von der genannten Erregung abhängt, dadurch gekennzeichnet, dass das genannte Material zwischen der ersten Elektrodenart (18) und der dritten Elektrodenart (22) eingeschlossen ist und die genannten ersten und dritten Elektrodenarten berührt, und dass jede Linie (22) der genannten dritten Art sich in Form einer Anordnung von getrennten Punktelektroden (26) darstellt, von denen jede dieser Punktelektroden (26) mit einem Unterbrecher (28) versehen ist, der dazu geeignet ist, sie mit einem Leiter (32) konstanten Potentials, der allen Punktelektroden der gleichen Linie der Art gemeinsam ist, zu verbinden oder sie elektrisch zu isolieren, wobei die Steuerung dieses Unterbrechers mittels einer Steuerleitung (30) bewirkt ist, die allen Punktelektroden derselben Linie der Art gemeinsam ist.

2. Anzeigevorrichtung nach Anspruch 1, dadurch gekennzeichnet, dass das Material ein Film aus Flüssigkristall ist, dessen optische Eigenschaft vom elektrischen Feld abhängt, das an ihn angelegt ist, wobei die genannten Erregungssignale elektrische Spannungen sind.

3. Anzeigevorrichtung nach einem der Ansprüche 1 und 2, dadurch gekennzeichnet, dass die Elektrodenarten (18, 20, 22) von einem transparenten Leitermaterial gebildet sind.

4. Anzeigevorrichtung nach Anspruch 3, dadurch gekennzeichnet, dass das transparente Leitermaterial Indiumoxid ist.

5. Anzeigevorrichtung nach einem der Ansprüche 1 bis 4, dadurch gekennzeichnet, dass die Isolierschicht (24) aus der Gruppe, die Aluminiumoxid und Siliciumoxid enthält, gewählt ist.

6. Verfahren zum Steuern einer Matrixanzeigevorrichtung nach Anspruch 1, dadurch gekennnzeichnet, dass zum Beeinflussen der optischen Eigenschaft des Materials der Zone $x_i y_j$ man die Linie $x_i$ der ersten Elektrodenart (18) ein negatives Potential $-V_1$ und an die anderen Linien der genannten Art ein negatives Potential $-V_0$ und man an die Spalte $y_j$ der zweiten Elektrodenart (20) ein positives Potential $V_2$ anlegt, wobei die Linien $x_i$ der dritten Elektrodenart (22), die von den anderen Linien der genannten Familie isoliert ist, ein positives Potential $V_0$, aufweist, das unterhalb von $V_2$ liegt.

7. Steuerungsverfahren nach Anspruch 6, dadurch gekennzeichnet, das man die q Zonen derselben Linie $x_i$ der ersten Elektrodenart simultan steuert, indem man an jede Spalte der zweiten Elektrodenart das Potential $V_2$ gleichzeitig anlegt.

**Claims**

1. Matrix display device comprising a display cell having two insulating transparent walls (10, 12), an electro-optical material, a first group of p lines of parallel electrodes (18) disposed on one of the insulating walls (10), a second group of q columns of parallel electrodes (20), disposed on the other insulating wall (12), the lines and columns crossing one another and thereby defining a plurality of zones, constituting a matrix, within said electro-optical material, each zone $x_i y_j$ being defined by the area of material covered by line $x_i$, where i is an integer such that $1 \leqslant i \leqslant p$, and by, column $y_j$, where j is an integer such that $1 \leqslant j \leqslant q$, a third group of p parallel lines of electrodes (22) whose orientation is identical to that of the first group, disposed on the second group of electrodes (20), and electrically insulated from said second group by means of an insulating layer (24), and means permitting excitation signals to be delivered to the electrodes, said material having optical properties dependent upon said excitation, characterized in that said material is sandwiched between the first group of electrodes (18) and the third group of electrodes (22), and in contact with said first and third groups of electrodes, and in that each line (22) of the said third group is present in the form of an assembly of separate point electrodes (26), each of said point electrodes (26) having an interrupter (28) adapted to electrically isolate it, or to connect it to a constant potential conductor (32), common to all the point electrodes of the same line of the group, command of said interrupter being effected through a command conductor (30) common to all the point electrodes of the same line of the group.

2. Display device according to Claim 1, characterized in that the material is a film of a liquid crystal, whose optical property depends on the electrical field applied thereto, said excitation signals being electric potentials.

3. Display device according to either one of Claims 1 and 2, characterized in that the groups of electrodes (18, 20, 22) comprise a transparent conducting material.

4. Display device according to Claim 3, characterized in that the transparent conductive material is indium oxide.

5. Display device according to any one of Claims 1 to 4, characterized in that the insulating layer (24) is selected from the group comprising alumina and silica.

6. Process for control of matrix display device according to Claim 1, characterized in that to control the optical properties of the material of zone $x_i y_j$, a negative potential $-V_1$ is applied to line $x_i$ of the first group of electrodes (18) and a negative potential $-V_0$ is applied to the other lines of said group, and in that a positive potential $V_2$ is applied to column $y_j$ of the second group of electrodes (20), line $x_i$ of the third group of electrodes (22) being isolated and the other lines of said group brought to a positive potential $V'_0$ less than $V_2$.

7. Command process according to Claim 6, characterized in that the q zones of the same line $x_i$ of the first electrode group are simultaneously commanded by simultaneously applying potential $V_2$ to each column of the second group of electrodes.

FIG. 1

FIG. 2

FIG.3